# EUROPEAN PATENT APPLICATION

(11) **EP 4 524 581 A1**
(43) Date of publication of application: **19.03.2025**
(21) Application number: 23899566.6
(22) Date of filing: 26.09.2023
(51) Int. Cl.: G01R 31/08, G06F 30/27, G06V 10/764, G06T 7/73, G06V 10/762, G06V 10/77, G06V 10/80, G06F 113/16, G06F 119/08

(54) **ANOMALITY DETECTION METHOD AND APPARATUS FOR CABLE TERMINAL OF RAIL VEHICLE**

(30) Priority: 08.12.2022 CN 202211575348
(71) Applicant: CRRC Qingdao Sifang Co., Ltd., Qingdao, Shandong 266111 (CN)
(72) Inventor: YU, Xiang, Qingdao, Shandong 266111 (CN); YU, Jin, Qingdao, Shandong 266111 (CN); NIU, Buzhao, Qingdao, Shandong 266111 (CN); PENG, Chang, Qingdao, Shandong 266111 (CN); ZHANG, Peng, Qingdao, Shandong 266111 (CN); ZHAO, Zongjian, Qingdao, Shandong 266111 (CN); ZHANG, Kuiwei, Qingdao, Shandong 266111 (CN)
(74) Representative: Dilg, Haeusler, Schindelmann Patentanwaltsgesellschaft mbH
(86) International application number: PCT/CN2023/121619
(87) International publication number: WO 2024/119983

(57) **Abstract**

The present application relates to the technical field of rail transit, and in particular to a real-time anomality detection method and apparatus for a cable terminal of a rail vehicle. The method comprises: collecting ambient temperature data and analysis data of a cable terminal to be detected; and according to the ambient temperature data and the analysis data, performing analysis processing by using a preset detection model to obtain a detection result of said cable terminal, wherein the analysis data comprises image data, temperature data, and sound data, and the preset detection model comprises a detection model for performing analysis processing on the ambient temperature data, the image data, and the temperature data or a detection model for performing analysis processing on the ambient temperature data, the image data, the temperature data, and the sound data. The present application aims to solve the problem of low accuracy of fault detection of cable terminals of rail vehicles due to the fact that missing alarms and false alarms easily occur when existing detection methods detect the cable terminals.

## Description

### CROSS-REFERENCES TO RELATED APPLICATIONS

The present application claims priority to Chinese patent application No. 202211575348.4 filed on December 08, 2022, entitled "Anomality Detection Method and Apparatus for Cable Terminal of Rail Vehicle", which is hereby incorporated by reference in its entirety.

### FIELD

The present application relates to the field of rail transit, in particular to a real-time malfunction detection method and apparatus for a cable terminal of a rail vehicle.

### BACKGROUND

A cable terminal refers to a device installed at an end of a cable to be electrically connected with other parts of a high-voltage system of a rail vehicle and be insulated from connection points. A semi-rigid cable terminal is an important component of this system. When the semi-rigid cable terminal malfunctions, it directly affects performance of the high-voltage system of the rail vehicle, and then safety of vehicle operation would be affected. Therefore, it is necessary to monitor and detect a state of the semi-rigid cable terminal in real time to ensure the safety of vehicle operation.

In the related art, no methods for directly monitoring a semi-rigid cable terminal of a rail vehicle are present. Referring to monitoring methods of other components of the high-voltage system, temperature detection is the most widely used detection method since temperature detection technology is relatively mature and relatively low in cost. The temperature detection method in the related art is to collect a temperature value of the equipment and determine whether the device is malfunctional by comparing the collected temperature value with a temperature threshold. However, this method often leads to a missed report and a false report, due to inability to fully consider ambient temperature, device consistency and temperature changes, etc. Therefore, it is urgent to establish a real-time detection method for cable terminals with high accuracy, precise positioning and high efficiency.

### SUMMARY

The present application provides a malfunction detection method and apparatus for a cable terminal of a rail vehicle which solves the problem that a missed report and a false report are prone to occur when a cable terminal is detected using traditional detection method, resulting in low accuracy in the malfunction detection of the cable terminal of a rail vehicle.

The present application provides a malfunction detection method for a cable terminal of a rail vehicle, including:
collecting ambient temperature data and analysis data of a cable terminal to be detected; and
analyzing and processing the ambient temperature data and the analysis data using a preset detection model to obtain a detection result of the cable terminal to be detected;
where the analysis data includes image data, temperature data and sound data; and
the preset detection model includes a detection model for analyzing and processing the ambient temperature data, the image data and the temperature data, or a detection model for analyzing and processing the ambient temperature data, the image data, the temperature data and the sound data.

In an embodiment, in the step of analyzing and processing the ambient temperature data and the analysis data using a preset detection model to obtain the detection result of the cable terminal to be detected, analyzing and processing using the detection model for analyzing and processing the ambient temperature data, the image data and the temperature data to obtain the detection result of the cable terminal to be detected includes:
extracting temperature data of each frame in the temperature data;
calibrating a position coordinate point range of the cable terminal to be detected in the image data;
extracting a temperature value corresponding to the position coordinate point range base on the temperature data of each frame;
processing and transforming the temperature value based on the ambient temperature data; and
determining the processed and transformed temperature value of each frame according to a preset temperature alarm strategy to obtain the detection result of the cable terminal to be detected.

In an embodiment, the preset temperature alarm strategy includes one or more of: an absolute average temperature value alarm strategy, an absolute temperature proportional value alarm strategy, a relative temperature average value alarm strategy, a relative temperature proportional value alarm strategy, a temperature difference average value alarm strategy, a temperature difference proportional value alarm strategy, a temperature rising rate average value alarm strategy and a temperature rising rate proportional value alarm strategy.

In an embodiment, the determining the processed and transformed temperature value of each frame according to the preset temperature alarm strategy to obtain the detection result of the cable terminal to be detected includes:
step 1, setting up a counter *F₂*, and initializing the counter *F₂* to *0;*
   where the counter *F₂* represents the number of consecutive accumulated frames of an abnormal temperature value of the cable terminal to be detected;
step 2, determining the temperature value of a current frame of the cable terminal to be detected according to the preset temperature alarm strategy, where in case of malfunction, the counter *F₂* increases by 1; and in case of normal, the counter *F₂* is reset to 0;
step 3, after determining the counter *F₂* in step 2, when the number of the consecutive accumulated frames of the counter *F₂* is greater than the number of a set value of frames, determining that the cable terminal malfunctions, and the counter is reset to 0; and when the number of the consecutive accumulated frames of the counter *F₂* is less than the number of the set value of frames, determining that the cable terminal is normal; and
step 4, repeating step 2 and step 3 to determine the temperature value of subsequent frames of the cable terminal to obtain the detection result of the cable terminal to be detected.

In an embodiment, in the analyzing and processing the ambient temperature data and the analysis data using the preset detection model to obtain the detection result of the cable terminal to be detected, analyzing and processing using the detection model for analyzing and processing the ambient temperature data, the image data, the temperature data and the sound data to obtain the detection result of the cable terminal to be detected includes:
extracting temperature features of the image data;
extracting sound features corresponding to a time of the image data in the sound data;
normalizing the temperature features and sound features, and establishing fusion features of temperature and sound; and
inputting the temperature features, the sound features and the fusion features of temperature and sound into a preset cluster analysis model and detecting to obtain the detection result of the cable terminal to be detected;
where the preset cluster analysis model is obtained by training based on normal temperature features, normal sound features, normal fusion features of temperature and sound, and abnormal temperature features, abnormal sound features, and abnormal fusion features of temperature and sound as samples, and labels corresponding to normal temperature features, normal sound features, normal fusion features of temperature and sound, and abnormal temperature features, abnormal sound features, and abnormal fusion features of temperature and sound as samples.

In an embodiment, after analyzing and processing the ambient temperature data and the analysis data using a preset detection model to obtain a detection result of the cable terminal to be detected, the malfunction detection method further includes a step for locating an abnormal detection result:
obtaining, when the detection result of the cable terminal to be detected is abnormal, a malfunction location of an abnormal cable terminal based on the analysis data using a malfunction location method for cable terminal.

In an embodiment, the obtaining, when the detection result of the cable terminal to be detected is abnormal, a malfunction location of an abnormal cable terminal based on the analysis data using a malfunction location method for cable terminal includes:
determining a location of the abnormal cable terminal based on sound features;
matching the abnormal cable terminal based on the image data of the abnormal cable terminal and a cable terminal identification model using a multi-point locating mode;
dividing an image area of the matched abnormal cable terminal into a plurality of subareas, and determining a temperature of the divided abnormal cable terminal based on the temperature data to obtain the malfunction location of the abnormal cable terminal;
where the cable terminal identification model is obtained by collecting design data of the cable terminal, and making a preliminary cable terminal identification template based on a size of a design drawing in the design data; and
matching at least one thousand real contour images of the cable terminal and training the preliminary cable terminal identification template.

The present application further provides a malfunction detection apparatus for a cable terminal of a rail vehicle, including:
a collection module, used for collecting ambient temperature data and analysis data of a cable terminal to be detected;
a detection module, used for analyzing and processing the analysis data using a preset detection model to obtain a detection result of the cable terminal to be detected;
where the analysis data includes image data, temperature data and sound data; and
the preset detection model includes a detection model for analyzing and processing the ambient temperature data, the image data and the temperature data, or a detection model for analyzing and processing the ambient temperature data, the image data, the temperature data and the sound data.

In an embodiment, in the analyzing and processing the ambient temperature data and the analysis data using the preset detection model to obtain the detection result of the cable terminal to be detected, analyzing and processing using the detection model for analyzing and processing the ambient temperature data, the image data, the temperature data and the sound data to obtain the detection result of the cable terminal to be detected includes:
extracting temperature data of each frame in the temperature data;
calibrating a position coordinate point range of the cable terminal to be detected in the image data;
extracting a temperature value corresponding to the position coordinate point range base on the temperature data of each frame;
processing and transforming the temperature value based on the ambient temperature data; and
determining the processed and transformed temperature value of each frame according to a preset temperature alarm strategy to obtain the detection result of the cable terminal to be detected.

In an embodiment, the detection module includes the preset temperature alarm strategy, and the preset temperature alarm strategy includes one or more of: an absolute average temperature value alarm strategy, an absolute temperature proportional value alarm strategy, a relative temperature average value alarm strategy, a relative temperature proportional value alarm strategy, a temperature difference average value alarm strategy, a temperature difference proportional value alarm strategy, a temperature rising rate average value alarm strategy and a temperature rising rate proportional value alarm strategy.

The present application provides a real-time malfunction detection method and apparatus for the cable terminal of the rail vehicle. By the malfunction detection method for the cable terminal of the rail vehicle, collected ambient temperature data and analysis data including the image data, the temperature data and the sound data are analyzed by the preset detection model to fully consider the ambient temperature and temperature changes, etc., to avoid an effect of the ambient temperature on the detection results and prevent a missed report and a false report, which improves accuracy of detection for a cable terminal.

### BRIEF DESCRIPTION OF DRAWINGS

In order to more clearly illustrate the solutions of the embodiments according to the present application or the related art, the accompanying drawings used in the description of the embodiments or the related art are briefly introduced below. It should be noted that the drawings in the following description are only some embodiments of the present application. For those of ordinary skill in the art, other drawings may be obtained based on these drawings without creative efforts.
FIG. 1 is a schematic flow diagram of a malfunction detection method for a cable terminal of a rail vehicle according to an embodiment of the present application;
FIG. 2 is a schematic structural diagram of a malfunction detection apparatus for a cable terminal of a rail vehicle according to an embodiment of the present application; and
FIG. 3 is a schematic structural diagram of an electronic device according to an embodiment of the present application.

### DETAILED DESCRIPTION OF THE EMBODIMENTS

To make the objectives, solutions, and advantages of the present application clearer, the following provides a clear and complete description of the solutions in the present application in conjunction with the accompanying drawings. It should be noted that the described embodiments are only a part of the embodiments of the present application, rather than all of the embodiments. All other embodiments obtained by a person of ordinary skill in the art based on the embodiments of the present application without any creative efforts belong to the scope of the present application.

### Embodiment 1

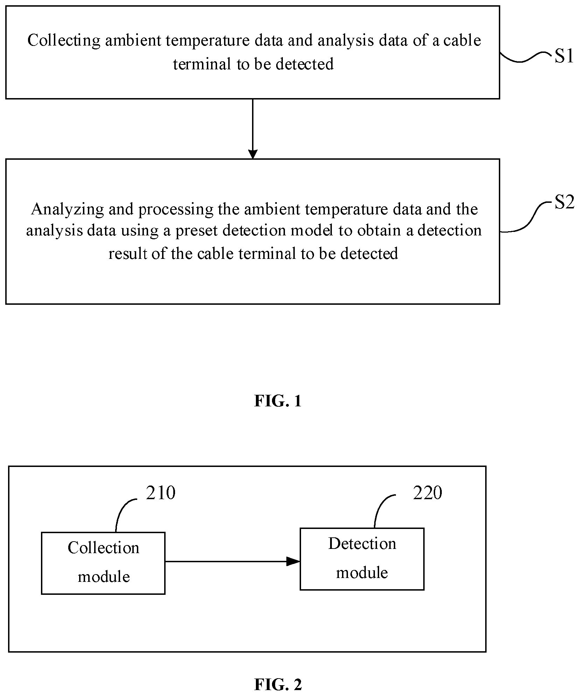

FIG. 1 is a schematic flow diagram of a malfunction detection method for a cable terminal of a rail vehicle according to an embodiment of the present application. As shown in FIG. 1, the malfunction detection method includes:
S1: collecting ambient temperature data and analysis data of a cable terminal to be detected; and
S2: analyzing and processing the ambient temperature data and the analysis data using a preset detection model to obtain a detection result of the cable terminal to be detected.

The analysis data includes image data, temperature data and sound data.

In an embodiment, an entire area of a cable terminal is collected using an infrared camera to obtain at least 60 frames of temperature data of the cable terminal and image data of a collection area, and obtain the ambient temperature data. A sound sensor is installed near the cable terminal to collect the sound data. As such, integrity of a temperature collection for the cable terminal is ensured.

The preset detection model includes a detection model for analyzing and processing the ambient temperature data, the image data and the temperature data, or a detection model for analyzing and processing the ambient temperature data, the image data, the temperature data and the sound data.

In the embodiments of the present application, collected ambient temperature data and analysis data including the image data, the temperature data and the sound data are analyzed by the preset detection model, so as to fully consider the ambient temperature and temperature changes, etc., to avoid an effect of the ambient temperature on the detection results and prevent a missed report and a false report, which improves accuracy of detection for a cable terminal.

In the embodiment, in step S2, the analyzing and processing the ambient temperature data and the analysis data using a preset detection model to obtain the detection result of the cable terminal to be detected where the preset detection model includes the detection model for analyzing and processing the ambient temperature data, the image data and the temperature data, includes the following steps.

Step 1: temperature data of each frame in the temperature data are extracted.

Step 2: a position coordinate point range of a cable terminal to be detected in the image data is calibrated. For example, image data of 100*100 pixel points are used, coordinate points of the cable terminal can be assigned to ((2, 5), (2, 6), (2, 7), (3, 5), (3, 6), (3, 7)) by selecting a left upper corner coordinate point of a cable terminal block in the image data as (2,5), and a right lower corner coordinate point as (3, 7).

Step 3: a temperature value corresponding to the position coordinate point range base on the temperature data of each frame is extracted. For example, the temperature value Tis (34, 36, 35, 35, 36, 34).

Step 4: the temperature value is processed and transformed based on the ambient temperature data. The ambient temperature in the ambient temperature data is *T_{amb}* (for example, *T_{amb}=*25°C)*.*

Step 5: the processed and transformed temperature value of each frame is determined according to the preset temperature alarm strategy to obtain the detection result of the cable terminal to be detected.

In an embodiment, steps for processing and transforming the temperature value are as follows.

An average temperature value *Tₐᵥₑ* of a cable terminal area is an average value of the temperature values *T* of current frame corresponding to all coordinate points in a cable terminal area. For example, when the temperature values corresponding to all coordinate points are 34,36,35,35,36,34, the average temperature value *Tₐᵥₑ* of the cable terminal area=35.

A relative temperature values *Tᵣₑₗ* of the cable terminal area is *T-T_{amb}* and obtained by subtracting a current ambient temperature value *T_{amb}* from the temperature values *T* of current frame corresponding to all coordinate points in the cable terminal area. For example, *T_{amb}=25,* and *Tᵣₑₗ=*(9*,* 11, 10, 10, 11, 9).

An average value *Tᵣₑₗ₋ₐᵥₑ* of the relative temperature value of the cable terminal area is an average value of the relative temperature value *Tᵣₑₗ* of current frame corresponding to all coordinate points in the cable terminal area. For example, *Tᵣₑₗ*=(9, 11, 10, 10, 11, 9), and *Tᵣₑₗ₋ₐᵥₑ*=10.

A temperature difference *T_{dif}* of the cable terminal area is *T- T₁* and obtained by subtracting an average temperature value *T₁* of other cable terminals from the temperature values of the current frame corresponding to all coordinate points in the cable terminal area. For example, *T₁=*(33, 35, 34, 34, 35, 33), and *T_{dif}=*(1, 1, 1, 1, 1, 1).

An average value *T_{dif-ave}* of the temperature difference *T_{dif}* of the cable terminal area is an average value of the temperature difference *T_{dif}* of the current frame corresponding to all coordinate points in the cable terminal area. For example, *T_{dif}=*(1, 1, 1, 1, 1, 1), and *T_{dif-ave}*=*1.*

A temperature rising rate of the cable terminal area is *Tᵣₐₜ=T- T₀* and obtained by subtracting a temperature values *T₀* of a previous frame of the same cable terminal from the temperature values of current frame corresponding to all coordinate points in the cable terminal area. For example, *T₀=*(30, 30, 30, 30, 30, 30), *Tᵣₐₜ=*(4, 6, 5, 5, 6, 4).

An average value *Tᵣₐₜ₋ₐᵥₑ* of the temperature rising rate *Tᵣₐₜ* of the cable terminal area is an average value of the temperature rising rates *Tᵣₐₜ* of the current frame corresponding to all coordinate points in the cable terminal area. For example, *Tᵣₐₜ=*(4, 6, 5, 5, 6, 4), and *Tᵣₐₜ₋ₐᵥₑ*=5.

In an embodiment, the preset temperature alarm strategy includes one or more of: an absolute average temperature value alarm strategy, an absolute temperature proportional value alarm strategy, a relative temperature average value alarm strategy, a relative temperature proportional value alarm strategy, a temperature difference average value alarm strategy, a temperature difference proportional value alarm strategy, a temperature rising rate average value alarm strategy and a temperature rising rate proportional value alarm strategy.
1) The absolute average temperature value alarm strategy is described as follows. An average temperature value *Tₐᵥₑ* of a current frame is counted, and *Tₐᵥₑ* is compared with a set value *Tₐᵥₑ₋ₘₐₓ* (for example, *Tₐᵥₑ₋ₘₐₓ*=100°C). If *Tₐᵥₑ>Tₐᵥₑ₋ₘₐₓ,* the state of the current frame is abnormal temperature data, and if *Tₐᵥₑ <Tₐᵥₑ₋ₘₐₓ,* the state of the current frame is normal temperature data.
2) The absolute temperature proportional value alarm strategy is described as follows. All temperature values *T* of the current frame are compared with a set value *Tₘₐₓ,* a proportion *P₁* of the number of temperature points exceeding the set value to the number of total points is counted, where *P₁* represents (the number of points of T>Tₘₐₓ)/(the number of *total points*), and *P₁* is compared with a set value *P₁₋ₘₐₓ* (for example, *P₁₋ₘₐₓ=20*%). If *P₁>P₁₋ₘₐₓ,* the state of the current frame is abnormal temperature data, and if *P₁<P₁₋ₘₐₓ,* the state of the current frame is normal temperature data.
3) The relative temperature average value alarm strategy is described as follows. A relative temperature value *Tᵣₑₗ* of the current frame is *T-T_{amb}* and calculated, an average value *Tᵣₑₗ₋ₐᵥₑ* of the relative temperature value of the current frame is calculated, and *Tᵣₑₗ₋ₐᵥₑ* is compared with a set value *Tᵣₑₗ₋ₐᵥₑ₋ₘₐₓ* (for example, *Tᵣₑₗ₋ₐᵥₑ₋ₘₐₓ=*80°C), if *Tᵣₑₗ₋ₐᵥₑ*>*Tᵣₑₗ₋ₐᵥₑ₋ₘₐₓ,* the state of the current frame is abnormal temperature data, and if *Tᵣₑₗ₋ₐᵥₑ<Tᵣₑₗ₋ₐᵥₑ₋ₘₐₓ,* the state of the current frame is normal temperature data.
4) The relative temperature proportional value alarm strategy is described as follows. The relative temperature value *Tᵣₑₗ* of the current frame is *T-T_{amb}* and calculated, all relative temperature values *Tᵣₑₗ* of the current frame is compared with a set value *Tᵣₑₗ₋ₘₐₓ,* a proportion *P₂* of the number of temperature points exceeding the set value to the number of the total points is counted, where *P₂* represents the number of points of *Tᵣₑₗ*>*Tᵣₑₗ₋ₘₐₓ*/the number of the total points, and *P₂* is compared with a set value *P₂₋ₘₐₓ* (for example, *P₂₋ₘₐₓ=*20%). If P₂>P₂₋ₘₐₓ, the state of the current frame is abnormal temperature data, and if P₂<P₂₋ₘₐₓ, the state of the current frame is normal temperature data.
5) The temperature difference average value alarm strategy is described as follows. Temperature differences *T_{dif}* between a temperature *T* of the current frame and one or more temperatures *T₁* (For example, if the number of *T₁* is more than one, an average value of *T₁* should be taken.) of other cable terminals in a same vehicle are calculated, an average value *T_{dif-ave}* of the temperature difference *T_{dif}* of the current frame is calculated, and *T_{dif-ave}* is compared with a set value *T_{dif-ave-max}* (for example, *T_{dif ave-max}=2*0°C). If *T_{dif-ave}>T_{dif-ave-max}*, the temperature data of the current frame are abnormal temperature data, and if *T_{dif-ave}<T_{dif-ave-max},* the temperature data of the current frame are normal temperature data.
6) The temperature difference proportional value alarm strategy is described as follows. The temperature differences *T_{dif}* between the temperature *T* of the current frame and one or more temperatures *T₁* (For example, if the number of *T₁* is more than one, an average value of *T₁* should be taken.) of other cable terminals in the same vehicle are calculated, all temperature differences *T_{dif}* of the current frame are compared with a set value *T_{dif-max},* a proportion *P*₃=(the number of points of *T_{dif}>T_{dif-max}*)/(the number of the total points) of the number of temperature difference points exceeding the set value to the number of total points is counted where *P*₃ represents the number of points of *T_{dif}>T_{dif-max}*/the number of the total points, and *P₃* is compared with a set value *P₃₋ₘₐₓ* (for example, *P₃₋ₘₐₓ*=20%). If *P3>P₃₋ₘₐₓ,* the state of the current frame is abnormal temperature data, and if *P3<P₃₋ₘₐₓ,* the state of the current frame is normal temperature data.
7) The temperature rising rate average value alarm strategy is described as follows. A difference *Tᵣₐₜ* between the temperature *T* of the current frame and the temperature value *T₀* of the previous frame of the same cable terminal is calculated, where *Tᵣₐₜ* is the temperature rising rate of the cable terminal of the current frame, an average value *Tᵣₐₜ₋ₐᵥₑ* of the temperature rising rate of the current frame is calculated, and *Tᵣₐₜ₋ₐᵥₑ* is compared with a set value *Tᵣₐₜ₋ₐᵥₑ₋ₘₐₓ* (for example, *Tᵣₐₜ₋ₐᵥₑ₋ₘₐₓ=*10°C). If *Tᵣₐₜ₋ₐᵥₑ>Tᵣₐₜ₋ₐᵥₑ₋ₘₐₓ*, the state of the current frame is abnormal temperature data, and if *Tᵣₐₜ₋ₐᵥₑ<Tᵣₐₜ₋ₐᵥₑ₋ₘₐₓ*, the state of the current frame is normal temperature data.
8) The temperature rising rate proportional value alarm strategy is described as follows. A difference *Tᵣₐₜ* between the temperature *T* of the current frame and the temperature value *T₀* of the previous frame of the same cable terminal is calculated, where *Tᵣₐₜ* is the temperature rising rate of the cable terminal of the current frame, all temperature rising rates *Tᵣₐₜ* of the current frame are compared with a set value *Tᵣₐₜ₋ₘₐₓ,* a proportion *P₄* of the number of temperature rising rate points exceeding the set value to the number of total points is counted, where *P₄* represents the number of points of *Tᵣₐₜ>Tᵣₐₜ₋ₘₐₓ*/the number of total points, and *P₄* is compared with a set value *P₄₋ₘₐₓ* (for example, *P₄₋ₘₐₓ=20*%). If *P₄>P₄₋ₘₐₓ*, the state of the current frame is abnormal temperature data, and if *P₄<P₄₋ₘₐₓ,* the state of the current frame is normal temperature data.

The above-mentioned strategies for determining a state of the current frame can be used alone, that is, only one of the strategies is configured to determine the state of the current frame. The strategies can also be used in combination, and the combination mode is not limited to a voting mode (for example, when more than half of the strategies alarms, the current frame is malfunction), or a weighting mode (for example, a weight of each strategy is set to 12.5%), etc. The alarm strategies fully consider the situations of the ambient temperature, differences in different cable terminals, temperature rising due to a cable terminal failure, etc., so that the malfunction detection method for a cable terminal of a rail vehicle has high accuracy.

Step 6 a number of frames of determined abnormal temperature data is determined to obtain the detection result of the cable terminal to be detected.

The number of frames of determined abnormal temperature data is determined to obtain the detection result of the cable terminal to be detected includes the following steps.

Step 6.1: a counter *F₂* is set up, and the counter *F₂* is initialized to 0, where the counter *F₂* represents the number of consecutive accumulated frames of abnormal temperature value of the cable terminal.

Step 6.2: the temperature value of the current frame of the cable terminal is determined according to the preset temperature alarm strategy, where in case of malfunction, the counter *F₂* increases by 1 and being used as a counter for a next frame; and in case of normal, the counter *F₂* is reset to 0.

Step 6.3: after the counter in step 6.2 is determined, when the number of the consecutive accumulated frames of the counter *F₂* is greater than the number of a set value of frames *F₂₋ₘₐₓ,* (for example, *F₂₋ₘₐₓ* is set to 10, 20 or 30), the cable terminal is determined to be abnormal, and the counter is reset to 0; and when the number of the consecutive accumulated frames of the counter *F₂* is less than the number of the set value of frames, the cable terminal is determined to be normal.

Step 6.4: steps 6.2 and 6.3 is repeated to determine the temperature value of subsequent frames of the cable terminal to obtain the detection result of the cable terminal to be detected.

On one hand, the set values in the above steps can be set directly through expert experience, for example, it is set that *Tₐᵥₑ₋ₘₐₓ=100°C,* and *Tᵣₑₗ₋ₐᵥₑ₋ₘₐₓ=80°C.* On the other hand, the set values can also be obtained through statistical analysis of a large number of cable terminal temperature data. When all obtained temperature data are normal data, the *3*σ limit value can be set to the set value *T_{ave- max} or Tᵣₑₗ₋ₐᵥₑ₋ₘₐₓ,* etc. by using the *3σ* principle of normal distribution; and when obtained temperature data contain abnormal data, the set value (for example, (normal temperature average value)*0.3+(abnormal temperature average value)*0.7) can be set between the normal data (for example, a normal temperature average value) and the abnormal data (for example, an abnormal temperature average value) based on the distribution of normal data and abnormal data,.

In the embodiment, after analyzing and processing the ambient temperature data and the analysis data using a preset detection model to obtain a detection result of the cable terminal to be detected, the malfunction detection method further includes a step for locating an abnormal detection result:
obtaining, when the detection result of the cable terminal to be detected is abnormal, a malfunction location of an abnormal cable terminal based on the analysis data using a malfunction location method for cable terminal.

In an embodiment, the obtaining, when the detection result of the cable terminal to be detected is abnormal, a malfunction location of an abnormal cable terminal based on the analysis data using a malfunction location method for cable terminal includes the follows.

A location of the abnormal cable terminal is determined based on the sound features.

The abnormal cable terminal is matched based on the image data of the abnormal cable terminal to be detected and a cable terminal identification model using a multi-point locating mode (such as a three-point locating mode).

An image area of the matched abnormal cable terminal after being matched is divided into a plurality of subareas (such as 10 subareas), and a temperature of the divided abnormal cable terminal is determined based on the temperature data to obtain the malfunction location of the abnormal cable terminal. As such, the malfunction location of the abnormal cable terminal can be determined through the abnormal subarea location of the abnormal cable terminal.

The cable terminal identification model is obtained by collecting design data of the cable terminal, and making a preliminary cable terminal identification template based on a size of a design drawing in the design data. For example, coordinate points ((1, 2), (1, 3), ..., (2, 2)) corresponding to an outer contour curve of the cable terminal are given in the design drawing and
matching at least one thousand real contour images of the cable terminal and training the preliminary cable terminal identification template.

For example, when an image of 100*100 pixel points is adopted, the coordinate points corresponding to the outer contour curve in the image are drawn and fine-tuned based on the image to match the cable terminal in the at least one thousand images, and the preliminary cable terminal identification template is trained to obtain the cable terminal identification model to represent a real contour of the cable terminal in the image.

### Embodiment 2

On the basis of the embodiment 1, the preset detection model in embodiment 1 is changed with a detection model for analyzing and processing the ambient temperature data, the image data, the temperature data and the sound data.

In an embodiment, in the step of analyzing and processing the ambient temperature data and the analysis data using a preset detection model to obtain the detection result of the cable terminal to be detected, analyzing and processing using the detection model for analyzing and processing the ambient temperature data, the image data, the temperature data and the sound data to obtain the detection result of the cable terminal to be detected includes the follows.

Temperature features of the image data are extracted. For example, the temperature features include: an average temperature value *Tₐᵥₑ=35,* a relative temperature value *Tᵣₑₗ=T-T_{amb}=*(9, 11, 10, 10, 11, 9), a temperature difference *T_{dif}=T-T₁*=(1, 1, 1, 1, 1, 1), a temperature rising rate *Tᵣₐₜ=T-T₀*=(4, 6, 5, 5, 6, 4), etc,.

Sound features corresponding to the time of the image data in the sound data are extracted. For example, time domain features in the sound features includes an average sound amplitude within 1 second, a sound waveform index within 1 second, a sound pulse index within 1 second, a sound kurtosis index within 1 second, a sound margin index within 1 second and a sound peak-to-peak value within 1 second; and frequency domain features in the sound features includes: a sound center of gravity frequency within 1 second, a sound root mean square frequency within 1 second, a sound short-time power spectral density within 1 second, a sound spectral entropy within 1 second, a sound formants within 1 s, etc.

The temperature features and sound features are uniformly converted to a range of 0 to 1 respectively through normalization.

Fusion features of temperature and sound are established. For example, weighted summing is performed on the average temperature value and the average sound amplitude within 1 second, weighted summing is performed on the relative temperature value and the sound peak-to-peak value within 1 second, a maximum value between the temperature difference and the sound waveform index within 1 second is found, and the temperature rising rate and the sound spectral entropy within 1 second are averaged, etc.

The temperature features, the sound features and the fusion features of temperature and sound are input into a preset cluster analysis model and detected to obtain the detection result of the cable terminal to be detected. The preset cluster analysis model may adopt: K-MEANS clustering algorithm, mean shift clustering algorithm, DBSCAN clustering algorithm or hierarchical clustering algorithm, etc.

The preset cluster analysis model is obtained by training based on normal temperature features, normal sound features, normal fusion features of temperature and sound, and abnormal temperature features, abnormal sound features, and abnormal fusion features of temperature and sound as samples, and labels corresponding to normal temperature features, normal sound features, normal fusion features of temperature and sound, and abnormal temperature features, abnormal sound features, and abnormal fusion features of temperature and sound as samples.

A malfunction detection apparatus for a cable terminal of a rail vehicle provided by the present application is described below, and the malfunction detection apparatus for a cable terminal of a rail vehicle and the malfunction detection method for a cable terminal of a rail vehicle described above can be referred to each other.

The present application further provides a malfunction detection apparatus for a cable terminal of a rail vehicle, including:
a collection module 210, used for collecting ambient temperature data and analysis data of a cable terminal to be detected.

In the embodiment, the collection module includes an infrared camera and a sound sensor. The infrared camera is configured to collect temperature of an entire area of a cable terminal to obtain a surface temperature of the cable terminal, and to obtain ambient temperature at the same time. Further, in order to ensure integrity of the detection, a plurality of infrared cameras may be provided at different angles and positions to obtain more complete semi-rigid terminal temperature data. The number of cameras is three or more, the cameras are distributed on a circle of a distance greater than 20 cm and less than 100 cm away from a cable terminal area, and the infrared cameras are uniformly distributed along the circumferential direction. The sound sensors are mounted near the cable terminal on a roof of the rail vehicle, and are configured to collect sound emitted by the cable terminal in an operation process. The number of sound sensors is three or more, the sound sensors are distributed on the circle of the distance greater than 20 cm and less than 100 cm away from the cable terminal area, and the sound sensors are uniformly distributed along the circumferential direction. After the analysis data is obtained, the analysis data are transmitted to a detection module in a manner of wired or wireless transmission.

The malfunction detection apparatus for a cable terminal of a rail vehicle further includes a detection module 220, used for analyzing and processing the analysis data using a preset detection model to obtain a detection result of the cable terminal to be detected.

The analysis data includes image data, temperature data and sound data.

The preset detection model includes a detection model for analyzing and processing the ambient temperature data, the image data and the temperature data, or a detection model for analyzing and processing the ambient temperature data, the image data, the temperature data and the sound data. In the embodiments of the present application, the collection module collects the ambient temperature data and the analysis data including the image data, the temperature data and the sound data of the cable terminal to be detected, and the detection module analyzes and processes the analysis data using a preset detection model to obtain the detection result of the cable terminal to be detected, which fully considers the situations of the ambient temperature, differences in different cable terminals, temperature rising due to a cable terminal malfunction, etc., which improves accuracy of detection for cable terminals.

The obtaining the detection result of the cable terminal to be detected through analyzing and processing the ambient temperature data and the analysis data using the preset detection model, analyzing and processing using the detection model for the detection model for analyzing and processing the ambient temperature data, the image data and the temperature data to obtain the detection result of the cable terminal to be detected includes:
extracting temperature data of each frame in the temperature data;
calibrating a position coordinate point range of a cable terminal to be detected in the image data;
extracting a temperature value corresponding to the position coordinate point range base on the temperature data of each frame;
processing and transforming the temperature value based on the ambient temperature data; and
determining the processed and transformed temperature value of each frame according to a preset temperature alarm strategy to obtain the detection result of the cable terminal to be detected.

The detection module includes the preset temperature alarm strategy, and the preset temperature alarm strategy includes one or more of: an absolute average temperature value alarm strategy, an absolute temperature proportional value alarm strategy, a relative temperature average value alarm strategy, a relative temperature proportional value alarm strategy, a temperature difference average value alarm strategy, a temperature difference proportional value alarm strategy, a temperature rising rate average value alarm strategy and a temperature rising rate proportional value alarm strategy.

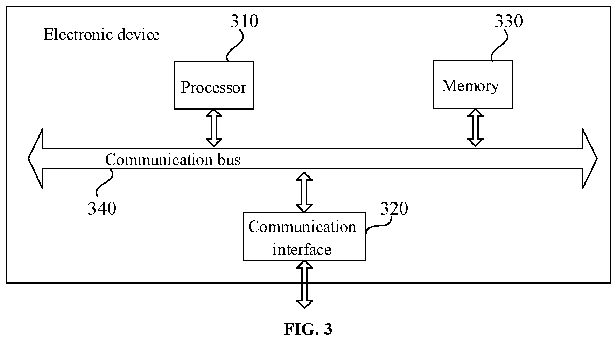

FIG. 3 is a schematic structural diagram of an electronic device according to an embodiment of the present application. As shown in FIG. 3, the electronic device includes a processor 310, a communication interface 320, a memory 330 and a communication bus 340, where the processor 310, the communication interface 320 and the memory 330 complete mutual communication through the communication bus 340. The processor 310 may invoke a logic instruction in the memory 330 to execute the malfunction detection method for a cable terminal of a rail vehicle, the malfunction detection method includes:
S1: collecting ambient temperature data and analysis data of a cable terminal to be detected; and
S2: analyzing and processing the ambient temperature data and the analysis data using a preset detection model to obtain a detection result of the cable terminal to be detected.

The analysis data includes image data, temperature data and sound data.

In an embodiment, an infrared camera is configured to collect an entire area of a cable terminal to obtain at least 60 frames of temperature data of the cable terminal and image data, and obtain the ambient temperature data. A sound sensor is installed near the cable terminal to collect the sound data. As such, integrity of a temperature collection for the cable terminal is ensured.

In addition, the logic instruction in the memory 330 may be implemented in a form of a software functional unit and sold or used as an independent product, and may be stored in a computer-readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that can store program codes such as U disk, mobile hard disk, read-only memory (ROM), random access memory (RAM), magnetic disk, optical disk, etc.

The present application further provides a computer program product, the computer program product includes a computer program, the computer program can be stored on a non-transitory computer readable storage medium, and when the computer program is executed by the processor, the computer can execute the malfunction detection method for a cable terminal of a rail vehicle provided by above-mentioned methods, the malfunction detection method includes:
S1: collecting ambient temperature data and analysis data of a cable terminal to be detected; and
S2: analyzing and processing the ambient temperature data and the analysis data using a preset detection model to obtain a detection result of the cable terminal to be detected.

The analysis data includes image data, temperature data and sound data.

In an embodiment, an infrared camera is configured to collect an entire area of a cable terminal to obtain at least 60 frames of temperature data of the cable terminal and image data, and obtain the ambient temperature data. A sound sensor is installed near the cable terminal to collect the sound data. As such, integrity of a temperature collection for the cable terminal is ensured.

The present application further provides a non-transitory computer-readable storage medium, storing a computer program that causes, when executed by a processor, the processor to perform the malfunction detection method for a cable terminal of a rail vehicle provided by above-mentioned methods, the malfunction detection method includes:
S1: collecting ambient temperature data and analysis data of a cable terminal to be detected; and
S2: analyzing and processing the ambient temperature data and the analysis data using a preset detection model to obtain a detection result of the cable terminal to be detected.

The analysis data includes image data, temperature data and sound data.

In an embodiment, an infrared camera is configured to collect an entire area of a cable terminal to obtain at least 60 frames of temperature data of the cable terminal and image data, and obtain the ambient temperature data. A sound sensor is installed near the cable terminal to collect the sound data. As such, integrity of a temperature collection for the cable terminal is ensured.

The apparatus embodiments described above are merely schematic, where the units described as separate components may or may not be physically separate, and components displayed as units may or may not be physical units, that is, may be located in one place, or may also be distributed on multiple network units. Some or all of the modules may be selected according to actual needs to achieve the objectives of the solutions of the embodiments. One skilled in the art may understand and implement the foregoing without involving any inventive effort.

Based on the description of the above embodiments, one skilled in the art may clearly understand that the embodiments may be implemented by means of software plus a necessary general hardware platform, of course, may also be implemented by hardware. Based on such understanding, the above-mentioned technical solution can be embodied in the form of a software product in essence or in the form of a contribution to the prior art, and the computer software product may be stored in a computer-readable storage medium, such as a ROM/RAM, a magnetic disk, an optical disc, etc., and includes several instructions for enabling a computer device (which may be a personal computer, a server, or a network device, etc.) to perform the method described in the embodiment or some part of the embodiments.

It should be noted that the above embodiments are only configured to illustrate the technical solutions of the present application rather than limit the technical solutions of the present application. Although the present application has been described in detail with reference to the foregoing embodiments, it should be understood by those of ordinary skill in the art that the foregoing embodiments may still modify the technical solutions recited in the foregoing embodiments, or perform equivalent replacement on some of the technical features, and these modifications or substitutions do not make the nature of the corresponding technical solutions separate from the spirit and scope of the technical solutions of the embodiments of the present application.

## Claims

1. A malfunction detection method for a cable terminal of a rail vehicle, comprising:
collecting ambient temperature data and analysis data of a cable terminal to be detected; and
analyzing and processing the ambient temperature data and the analysis data using a preset detection model to obtain a detection result of the cable terminal to be detected;
wherein the analysis data comprises image data, temperature data and sound data; and
the preset detection model comprises a detection model for analyzing and processing the ambient temperature data, the image data and the temperature data, or a detection model for analyzing and processing the ambient temperature data, the image data, the temperature data and the sound data.

2. The malfunction detection method of claim 1, wherein in the step of analyzing and processing the ambient temperature data and the analysis data using a preset detection model to obtain the detection result of the cable terminal to be detected, analyzing and processing using the detection model for analyzing and processing the ambient temperature data, the image data and the temperature data to obtain the detection result of the cable terminal to be detected comprises:
extracting temperature data of each frame in the temperature data;
calibrating a position coordinate point range of the cable terminal to be detected in the image data;
extracting a temperature value corresponding to the position coordinate point range base on the temperature data of each frame;
processing and transforming the temperature value based on the ambient temperature data; and
determining the processed and transformed temperature value of each frame according to a preset temperature alarm strategy to obtain the detection result of the cable terminal to be detected.

3. The malfunction detection method of claim 2, wherein the preset temperature alarm strategy comprises one or more of:
an absolute average temperature value alarm strategy, an absolute temperature proportional value alarm strategy, a relative temperature average value alarm strategy, a relative temperature proportional value alarm strategy, a temperature difference average value alarm strategy, a temperature difference proportional value alarm strategy, a temperature rising rate average value alarm strategy and a temperature rising rate proportional value alarm strategy.

4. The malfunction detection method of claim 2, wherein the determining the processed and transformed temperature value of each frame according to the preset temperature alarm strategy to obtain the detection result of the cable terminal to be detected comprises:
step 1, setting up a counter *F₂*, and initializing the counter as *F₂=0;1*
wherein the counter *F₂* represents the number of consecutive accumulated frames of an abnormal temperature value of the cable terminal to be detected;
step 2, determining the temperature value of a current frame of the cable terminal to be detected according to the preset temperature alarm strategy, where in case of malfunction, the counter *F₂* increases by 1; and in case of normal, the counter *F₂* is reset to 0;
step 3, after determining the counter *F₂* in step 2, when the number of the consecutive accumulated frames of the counter *F₂* is greater than the number of a set value of frames, determining that the cable terminal malfunctions, and the counter is reset to 0; and when the number of the consecutive accumulated frames of the counter *F₂* is less than the number of the set value of frames, determining that the cable terminal is normal; and
step 4, repeating step 2 and step 3 to determine the temperature value of subsequent frames of the cable terminal to obtain the detection result of the cable terminal to be detected.

5. The malfunction detection method of claim 1, wherein in the analyzing and processing the ambient temperature data and the analysis data using the preset detection model to obtain the detection result of the cable terminal to be detected,
extracting temperature features of the image data;
extracting sound features corresponding to a time of the image data in the sound data;
normalizing the temperature features and sound features, and establishing fusion features of temperature and sound; and
inputting the temperature features, the sound features and the fusion features of temperature and sound into a preset cluster analysis model and detecting to obtain the detection result of the cable terminal to be detected;
wherein the preset cluster analysis model is obtained by training based on normal temperature features, normal sound features, normal fusion features of temperature and sound, and abnormal temperature features, abnormal sound features, and abnormal fusion features of temperature and sound as samples, and labels corresponding to normal temperature features, normal sound features, normal fusion features of temperature and sound, and abnormal temperature features, abnormal sound features, and abnormal fusion features of temperature and sound as samples.

6. The malfunction detection method of any one of claims 1 to 5, wherein after analyzing and processing the ambient temperature data and the analysis data using a preset detection model to obtain a detection result of the cable terminal to be detected, the malfunction detection method further comprises a step for locating an abnormal detection result:
obtaining, when the detection result of the cable terminal to be detected is abnormal, a malfunction location of an abnormal cable terminal based on the analysis data using a malfunction location method for cable terminal.

7. The malfunction detection method of claim 6, wherein the obtaining, when the detection result of the cable terminal to be detected is abnormal, a malfunction location of an abnormal cable terminal based on the analysis data using a malfunction location method for cable terminal comprises:
determining a location of the abnormal cable terminal based on sound features;
matching the abnormal cable terminal based on the image data of the abnormal cable terminal and a cable terminal identification model using a multi-point locating mode;
dividing an image area of the matched abnormal cable terminal into a plurality of subareas, and determining a temperature of the divided abnormal cable terminal based on the temperature data to obtain the malfunction location of the abnormal cable terminal;
where the cable terminal identification model is obtained by collecting design data of the cable terminal, and making a preliminary cable terminal identification template based on a size of a design drawing in the design data; and
matching at least one thousand real contour images of the cable terminal and training the preliminary cable terminal identification template.

8. A malfunction detection apparatus for a cable terminal of a rail vehicle, comprising:
a collection module, used for collecting ambient temperature data and analysis data of a cable terminal to be detected;
a detection module, used for analyzing and processing the analysis data using a preset detection model to obtain a detection result of the cable terminal to be detected;
wherein the analysis data comprises image data, temperature data and sound data; and
the preset detection model comprises a detection model for analyzing and processing the ambient temperature data, the image data and the temperature data, or a detection model for analyzing and processing the ambient temperature data, the image data, the temperature data and the sound data.

9. The malfunction detection apparatus of claim 8, wherein in the analyzing and processing the ambient temperature data and the analysis data using the preset detection model to obtain the detection result of the cable terminal to be detected, analyzing and processing using the detection model for analyzing and processing the ambient temperature data, the image data, the temperature data and the sound data to obtain the detection result of the cable terminal to be detected comprises:
extracting temperature data of each frame in the temperature data;
calibrating a position coordinate point range of the cable terminal to be detected in the image data;
extracting a temperature value corresponding to the position coordinate point range base on the temperature data of each frame;
processing and transforming the temperature value based on the ambient temperature data; and
determining the processed and transformed temperature value of each frame according to a preset temperature alarm strategy to obtain the detection result of the cable terminal to be detected.

10. The malfunction detection apparatus of claims 8 or 9, wherein the detection module comprises the preset temperature alarm strategy, and the preset temperature alarm strategy comprises one or more of: an absolute average temperature value alarm strategy, an absolute temperature proportional value alarm strategy, a relative temperature average value alarm strategy, a relative temperature proportional value alarm strategy, a temperature difference average value alarm strategy, a temperature difference proportional value alarm strategy, a temperature rising rate average value alarm strategy and a temperature rising rate proportional value alarm strategy.
